# EUROPÄISCHE PATENTSCHRIFT

(11) **EP 0 514 386 B1**
(45) Veröffentlichungstag und Bekanntmachung des Hinweises auf die Patenterteilung: **27.09.1995**
(21) Anmeldenummer: 91901744.2
(22) Anmeldetag: 18.12.1990
(51) Int. Cl.: H04N 3/24

(54) **LINE-BLANKING-SCHALTUNG**
LINE BLANKING CIRCUIT
CIRCUIT DE SUPPRESSION DE LIGNES

(30) Priorität: 10.02.1990 DE 4004161
(43) Veröffentlichungstag der Anmeldung: 25.11.1992
(73) Patentinhaber: Deutsche Thomson-Brandt GmbH, 78003 Villingen-Schwenningen (DE)
(72) Erfinder: KOBLITZ, Rudolf, D-7730 Villingen (DE); LEHR, Steffen, D-7730 Marbach (DE)
(86) Internationale Anmeldenummer: EP9002220
(87) Internationale Veröffentlichungsnummer: WO9112689

(56) Entgegenhaltungen:
- DE-A- 1 908 896
- DE-A- 1 956 079
- GB-A- 1 095 556

## Beschreibung

Die Erfindung betrifft eine Schaltung zur Erzeugung des Line-Blanking-Impulses in Bildwiedergabegeräten.

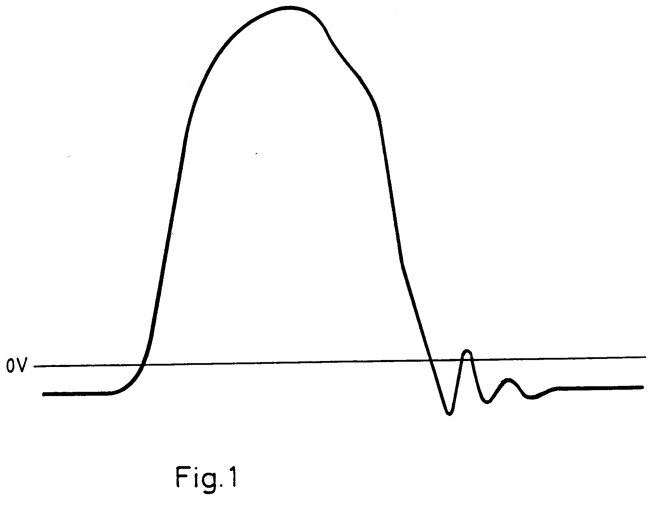

In Bildwiedergabegeräten mit Zeilenraster wird z.B. der Elektronenstrahl während des Zeilenrücklaufs dunkelgetastet, um störende Streifen bei der Bildwiedergabe zu vermeiden. Zur Dunkeltastung wird ein Line-Blanking-Impuls benötigt. Dieser wird im allgemeinen aus dem horizontalen Flyback(Zeilenrücklauf)-Impuls des Zeilentransformators erzeugt, der oft zusätzlich durch Dioden für die Hochspannungsgleichrichtung belastet ist und einen entsprechend deformierten Flyback-Impuls abgibt. Der Flyback-Impuls (Fig. 1) besteht näherungsweise aus einer negativen Gleichspannung, der während des Zeilenrücklaufs positive sinushalbwellen-förmige Impulse überlagert sind, wobei der größere Teil der Sinushalbwellen eine positive Spannung hat. Allerdings erzeugt der (belastete) Zeilentransformator unerwünschte Vor- oder Nachschwingungen (Ringing) im Flyback-Impuls.

Es sind Komparator-Schaltungen, z.B. TEA 2029 aus dem Thomson Semiconducteurs-Datenbuch 1986, Consumer IC's, bekannt, die mit Hilfe einer Schwellenspannung und eines Komparators aus dem Flyback-Impuls einen Line-Blanking-Impuls gewinnen. Für die Höhe dieser Schwellenspannung muß man aber normalerweise einen Kompromiß eingehen: Entweder setzt man die Schwellenspannung höher, dann gewinnt man vorteilhaft einen sauberen, allerdings relativ kurzen und spät einsetzenden Line-Blanking-Impuls, oder man setzt die Schwellenspannung niedriger, dann gewinnt man vorteilhaft einen früh einsetzenden und länger andauernden Line-Blanking-Impuls, geht dabei aber ein durch Streuungen bedingtes Risiko des Nach-Blankings ein. Dies bedeutet, daß durch Impulsspitzen am Ende der Sinushalbwelle die Schwellenspannung der Komparatorschaltung kurzzeitig überschritten wird und die Komparatorschaltung zusätzliche Ausgangsimpulse erzeugt, durch die das aktive Bild am Rand stellenweise dunkelgetastet wird.

Der Erfindung liegt die Aufgabe zugrunde, eine verbesserte Line-Blanking-Schaltung anzugeben, die einen früh einsetzenden Line-Blanking-Impuls ohne störende zusätzliche Ausgangsimpulse erzeugt.

Diese Aufgabe wird durch die im Patentanspruch 1 angegebenen Merkmale gelöst. Vorteilhafte Weiterbildungen der Erfindung sind in den Unteransprüchen angegeben.

Die Lösung besteht darin, daß die Schwellenspannung niedrig gewählt wird und ab einem Zeitpunkt, wo die fallende Flanke der Sinushalbwelle beginnt, jeweils für eine gewisse Zeitdauer, innerhalb derer die Nachschwingungen mit Sicherheit abgeklungen sind, ein erneutes Setzen der Komparator-Schaltung durch eine Zusatzschaltung innerhalb der Komparator-Schaltung verhindert wird.

Nachstehend wird ein Ausführungsbeispiel der Erfindung anhand der Zeichnungen erläutert. Diese zeigen in:
- Fig. 1: einen Flyback-Impuls mit Nachschwingungen,
- Fig. 2: die erfindungsgemäße Line-Blanking-Schaltung

Fig. 1 zeigt einen typischen Flyback-Impuls. Die Amplitude beträgt z.B. 63 Vₛₛ, wobei die positive Spitze des Flyback-Impulses eine Spannung von ca. 60 V hat. Es ist eine O V-Linie dargestellt. Am hinteren Ende des Flyback-Impulses erkennt man einige Nachschwinger, von denen der erste über die O V-Linie hinausragt. Der Flyback-Impuls kann auch eine umgekehrte Polarität haben und entsprechend invertiert sein.

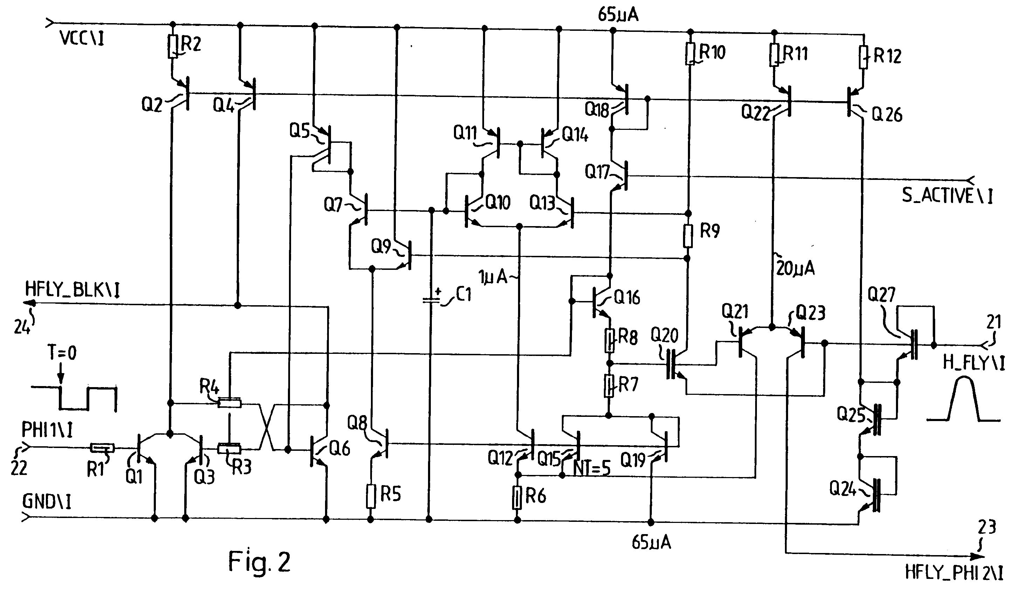

Fig. 2 zeigt eine Line-Blanking-Schaltung mit einem Flyback-Impuls-Eingang 21. Der Flyback-Impuls wird über einen nicht dargestellten Vorwiderstand an den Eingang 21 angeschlossen. Die Transistoren Q21 und Q23 bilden einen Komparator. Auf die Basis des Transistors Q23 wird der Flyback-Impuls geführt und auf die Basis von Q21 als Referenz eine Schwellenspannung von z.B. 1,3 V. Der Emitter von Transistor Q20 hat dann eine Spannung von ca. 0,6 V. Während des Zeilenhinlaufs beträgt die Flyback-Spannung nach obigem Beispiel -3 V. Die Spannung über dem Vorwiderstand (ca. 3,6 V) und dessen Widerstandswert bestimmen den eingeprägten Strom, der in den Eingang 21 fließt.
An Eingang 22 wird ein Phil-Signal zugeführt, das ohnehin im Bildwiedergabegerät vorhanden ist. Das Phil-Signal ist ein Rechtecksignal mit Zeilenfrequenz und ändert seinen Logikpegel ungefähr in der zeitlichen Mitte des Flyback-Impulses. Der Flyback-Impuls ist im Bereich von z.B. + - 5 µs um diese Phil-Flanke zu erwarten.

Der Kern der Erfindung besteht in Folgendem: Ein Kondensator C1 wird während des Zeilenhinlaufs auf einen durch den eingeprägten Strom am Eingang 21 bestimmten Pegel aufgeladen. Verursacht die ansteigende Flanke des Flyback-Impulses einen um z.B. 5% geringeren eingeprägten Strom, wird der Line-Blanking-Impuls aktiv. Ab einem darauffolgenden ersten Zeitpunkt wird die Ladung des Kondensators Cl bis zu einem zweiten Zeitpunkt gehalten. Steigt der eingeprägte Strom wieder über z.B. 95% des Wertes, den er während des Zeilenhinlaufs hatte, wird der Line-Blanking-Impuls beendet. Die in der Mitte des Flyback-Impulses liegende Flanke des Phil-Signals unterbindet vorteilhaft während dessen Zeitdauer ein erneutes, durch Nachschwinger des Flyback-Impulses verursachtes Starten des Line-Blanking-Impulses. Nach dieser Zeitdauer wird z.B. durch das Phil-Signal ein Starten des Line-Blanking-Impulses wieder freigegeben.

Der Kondensator C1 hat z.B. einen Wert von 10 - 15 pF. Weil diese Kapazität klein ist (und sich daher leicht integrieren läßt), sollte der von Q12 gelieferte Ladestrom und der Entladestrom auch nur einen entsprechenden Wert von ca. 1 µA haben. Der Ausgang 23 liefert ein rechteckförmiges Phi2-Signal, welches vom Flyback-Impuls abgeleitet ist und dessen Schaltflanken innerhalb des zu erzeugenden Line-Blanking-Impulses liegen. Das Phi2-Signal wird intern dazu benutzt, den Lade- und Entladevorgang von C1 auf bestimmte Zeitabschnitte zu begrenzen. Dadurch ergeben sich vorteilhaft trotz der kleinen Kapazität von C1 sinnvolle Lade- und Entladespannungen. Der erste Zeitpunkt fällt mit der z.B. ansteigenden Flanke und der zweite Zeitpunkt mit der entsprechend abfallenden Flanke des Phi2-Signals zusammen.

Vor Beginn des Flyback-Impulses lädt sich der Kondensator C1 in der Line-Blanking-Schaltung auf die Spannung auf, die sich durch den eingeprägten Strom an der Basis von Q13 einstellt. Der eingeprägte Strom wird durch den Vorwiderstand und die negative Gleichspannung des Flyback-Impulses während des Zeilenhinlaufs bestimmt. Die Spannung an C1 stellt praktisch eine Referenzspannung dar. Durch die Klemmung auf diese Referenzspannung während des Zeilenhinlaufs ist die Line-Blanking-Schaltung vorteilhaft selbsteinstellend und paßt sich Pegeltoleranzen des Flyback-Impulses automatisch an. Ein Abgleich ist nicht mehr notwendig. Durch die mit dem Phi1-Signal durchgeführte kurzzeitige Sperrung des Starts eines weiteren Line-Blanking-Impulses stört das Nachschwingen des Zeilentrafos nicht mehr.

Die Transistoren Q10 und Q13 bilden einen Differenzverstärker, die Transistoren Q11 und Q14 stellen einen Stromspiegel dar. Das Verhältnis der Widerstände R9 zu R10 (z.B. 500 / 10000 entspricht 5 %) bestimmt den Betrag, um den die Spannung an der Basis von Q9 gegenüber der Spannung über dem Kondensator C1 ansteigen muß, damit der Line-Blanking-Impuls aktiviert wird. Unterschreitet die Spannung an der Basis von Q9 die Spannung über dem Kondensator C1, wird der Line-Blanking-Impuls beendet. Zu diesem Zeitpunkt ist die Spannung an der Basis von Q13 um 5 % höher als die Spannung über dem Kondensator C1.

Die Basis von Transistor Q20 ist mit den Widerständen R7 und R8 auf eine Spannung von 1,3 V geklemmt. Sobald die positive Flanke des Flyback-Impulses die Schwellenspannung von 1,3 V überschreitet, wird über den Komparator Q21, Q23 die Spannung am Widerstand R6 angehoben. Es entsteht so an R6 ein Abbild des Phi2-Signals, das etwas innerhalb des zu bildenden Line-Blanking-Impulses liegt und aus einem mit Sicherheit nachschwingungsfreien Teil des Flyback-Impulses abgeleitet wird.
Solange das Phi2-Signal nicht aktiv ist, wird der Differenzverstärker Q10, Q13 mit einem Strom von z.B. 1 µA versorgt und der Kondensator C1 entsprechend den Spannungen an den Basen von Q10 und Q13 geladen bzw. entladen. Es stellt sich während des Zeilenhinlaufs eine Referenzspannung über dem Kondensator C1 ein. Diese Referenzspannung soll während des Flyback-Impulses gehalten werden.

Deshalb wird bei Auftreten des Phi2-Signals die Stromversorgung des Differenzverstärkers Q10, Q13 ausgeschaltet (erster Zeitpunkt). In der Zeitspanne zwischen dem Beginn des Line-Blanking-Impulses und dem ersten Zeitpunkt könnte sich der gespeicherte Wert der Referenzspannung über dem Kondensator C1 verändern. Eine entsprechende Änderung kann auch auftreten, wenn der zweite Zeitpunkt nicht genau mit dem Ende des Line-Blanking-Impulses übereinstimmt. Aber wegen der steil ansteigenden bzw. abfallenden Flanken des Flyback-Impulses, der Kapazitätsgröße von 15 pF für Kondensator C1, dem kleinen Ladestrom von 1 µA und dem vernachlässigbaren Leckstrom des Kondensators C1 wird vorteilhaft während dieser kurzen Zeitspanne die durch Kondensator C1 gespeicherte Referenzspannung praktisch nicht beeinflußt.

Die beiden Transistoren Q3 und Q6 und die beiden Widerstände R3 und R4 bilden ein Flip-Flop, das durch Transistor Q5 und durch das Phil-Signal über Transistor Q1 angesteuert wird. Das Phil-Signal verhindert ein unerwünschtes Setzen des Line-Blanking-Impulses durch Nachschwinger des Flyback-Impulses. Am Ausgang 24 steht der Line-Blanking-Impuls als Ausgangssignal dieses Flip-Flops zur Verfügung.

Für die Verarbeitung eines invertierten Flyback-Impulses am Eingang 21 kann die Line-Blanking-Schaltung entsprechend geändert werden.

## Patentansprüche

1. Selbstabgleichende Line-Blanking-Schaltung mit integrierten elektronischen Bauelementen zur Generierung von Line-Blanking-Impulsen an einem Ausgang (24), der an einem ersten Eingang (21) Zeilenrücklauf-Impulse (Fig. 1) und der an einem zweiten Eingang (22) ein erstes Schaltsignal mit Zeilenfrequenz (Phi1) zugeführt wird, dessen erste Schaltflanke jeweils ungefähr in der zeitlichen Mitte der Zeilenrücklauf-Impulse und dessen zweite Schaltflanke jeweils zwischen zwei Zeilenrücklauf-Impulsen liegt, und die ein zweites Schaltsignal mit Zeilenfrequenz (Phi2) auswertet, dessen Schaltflanken jeweils zeitlich innerhalb der Line-Blanking-Impulse liegen,
versehen mit an Speichermitteln (C1) angeschlossenen Vergleichermitteln (Q10, Q11, Q13, Q14), die einen in den Speichermitteln (C1) enthaltenen Referenzwert auf eine mit Gebermitteln (R10, R9) festgelegte Abweichung durch den Signalverlauf der Zeilenrücklauf-Impulse hin vergleichen, mit an die Vergleichermittel (Q10, Q11, Q13, Q14) angeschlossenen Sperrmitteln (Q12, R6), die mit Hilfe des zweiten Schaltsignals (Phi2) eine Änderung des Referenzwertes zwischen den zugehörigen Schaltflanken sperren, mit an die Vergleichermittel (Q10, Q11, Q13, Q14) angeschlossenen Schaltmitteln (R1, Q1, Q3, R3, R4, Q6), denen ein aus der Abweichung vom Referenzwert resultierendes drittes Schaltsignal und das erste Schaltsignal (Phi1) zugeführt wird und die die Line-Blanking-Impulse an ihrem Ausgang erzeugen, wobei in den Schaltmitteln (R1, Q1, Q3, R3, R4, Q6) mit Hilfe des ersten Schaltsignals (Phil) eine durch Nachschwingungen an der hinteren Flanke der Zeilenrücklauf-Impulse bedingte, zusätzliche Generation von Line-Blanking-Impulsen aufgrund wiederholter Abweichung vom Referenzwert unterdrückt wird.

2. Line-Blanking-Schaltung nach Anspruch 1, **dadurch gekennzeichnet**, daß die Speichermittel einen Kondensator (C1) enthalten.

3. Line-Blanking-Schaltung nach Anspruch 2, **dadurch gekennzeichnet**, daß die Sperrmittel (Q12, R6) die Stromversorgung für die Vergleichermittel (Q10, Q11, Q13, Q14) und den Ladestrom für den Kondensator (C1) entsprechend periodisch abschalten.

4. Line-Blanking-Schaltung nach Anspruch 2 oder 3, **dadurch gekennzeichnet**, daß der Kondensator (C1) im wesentlichen während des Zeilenhinlaufs geladen wird.

5. Line-Blanking-Schaltung nach einem oder mehreren der Ansprüche 1 bis 4, **dadurch gekennzeichnet**, daß das zweite Schaltsignal (Phi2) mit einem Komparator (Q21, Q23) aus den am ersten Eingang (21) anliegenden Zeilenrücklauf-Impulsen gewonnen wird, wobei ein Ausgang des Komparators (Q21, Q23) mit den Sperrmitteln (Q12, R6) verbunden ist.

6. Line-Blanking-Schaltung nach Anspruch 5, **dadurch gekennzeichnet**, daß ein weiterer Eingang des Komparators (Q21, Q23) mit den Gebermitteln (R10, R9) verbunden ist.

## Claims

1. Self-adjusting line blanking circuit with integrated electronic components for generating line blanking impulses at an output (24), said circuit being fed with line flyback impulses (Fig. 1) at a first input (21) and a first switching signal with line frequency (Phi1) at a second input (22), the first switching edge of said switching signal always lying approximately in the temporal center of the flyback impulses and the second switching edge of it always lying between two flyback impulses, and whereby said circuit evaluates a second switching signal with line frequency (Phi2) whose switching edges always lie, temporally, within the line blanking impulses,
said circuit being provided with comparator means (Q10, Q11, Q13, Q11) connected to memory means (C1), said comparator means comparing a reference value contained in the memory means (C1) against a deviation through the signal progression of the flyback impulses determined by means of generator means (R10, R9), and said circuit comprising blocking means (Q12, R6) connected to the comparator means (Q10, Q11, Q13, Q14) which block an alteration of the reference value between the associated switching edges with the aid of the second switching signal (Phi2), and comprising switching means (R1, Q1, Q3, R3, R4, Q6) connected to the comparator means (Q10, Q11, Q13, Q14) to which a third switching signal, resulting from the deviation from the reference value, and the first switching signal (Phi1) are fed, and which generate the line blanking impulses at their output, whereby in the switching means (R1, Q1, Q3, R3, R4, Q6), additional generation of line blanking impulses owing to repeated deviation from the reference value and dependent on the ringing at the backward.edge of the flyback impulses is suppressed with the aid of the first switching signal (Phi1).

2. Line blanking circuit according to claim 1, **characterized in that** the memory means contain a capacitor (C1).

3. Line blanking circuit according to claim 2, **characterized in that** the blocking means (Q12, R6) periodically disconnect the current supply for the comparator means (Q10, Q11, Q13, Q14) and the charging current for the capacitor (C1) correspondingly.

4. Line blanking circuit according to claim 2 or 3, **characterized in that** the capacitor (C1) is charged mainly during the line trace.

5. Line blanking circuit according to one or more of the claims 1 through 4, **characterized in that** the second switching signal (Phi2) is obtained using a comparator (Q21, Q23) from the flyback impulses applied to the first input (21), whereby one output of the comparator (Q21, Q23) is connected to the blocking means (Q12, R6).

6. Line blanking circuit according to claim 5, **characterized in that** a further input of the comparator (Q21, Q23) is connected to the generator means (R10, R9).

## Revendications

1. Circuit de suppression de ligne avec éléments modulaires électroniques intégrés pour la génération d'impulsions de suppression de ligne au niveau d'une sortie (24), ce circuit étant alimenté au niveau de sa première entrée (21) par des impulsions de retour de ligne (figure 1) et au niveau de sa deuxième entrée (22) par un premier signal de couplage avec fréquence de ligne (Phi1) dont le premier flanc de couplage se situe approximativement à la moitié du temps des impulsions de retour de ligne et dont le deuxième flanc de couplage se situe respectivement entre deux impulsions de retour de ligne, un deuxième signal de couplage avec fréquence de ligne (Phi2) dont les flancs de couplage se situent à l'intérieur des périodes d'impulsion de suppression de ligne étant exploité par ce circuit de suppression de ligne qui est doté d'éléments comparateurs (Q10, Q11, Q13, Q14) reliés à des éléments de mémorisation (C1) permettant la comparaison d'une valeur de référence contenue dans les éléments de mémorisation (C1) à un écart déterminé à l'aide d'éléments transmetteurs (R10, R9) par l'analyse de la courbe des signaux des impulsions de retour de ligne, qui est doté, en outre, d'éléments de blocage (Q12, R6) reliés aux éléments comparateurs (Q10, Q11, Q13, Q14) empêchant une modification de la valeur de référence entre les flancs de couplage correspondants à l'aide du deuxième signal de couplage (Phi2), et qui est doté enfin d'éléments de couplage (R1, Q1, Q3, R3, R4, Q6) reliés aux éléments comparateurs (Q10, Q11, Q13, Q14) alimentés par un troisième signal de couplage résultant de l'écart par rapport à la valeur de référence ainsi que par le premier signal de couplage (Phi1) qui génèrent les impulsions de suppression de ligne au niveau de leur sortie, la génération supplémentaire d'impulsions de suppression de ligne due aux écarts répétés par rapport à la valeur des références et résultant des post-oscillations au niveau du flanc arrière des impulsions de retour de ligne étant empêchée dans les éléments de couplage (R1, Q1, Q3, R3, R4, Q6) avec l'aide du premier signal de couplage (Phi1).

2. Circuit de suppression de ligne selon la revendication 1, caractérisé en ce que les éléments de mémorisation contiennent un condensateur (C1).

3. Circuit de suppression de ligne selon la revendication 2, caractérisé en ce que les éléments de blocage (Q12, R6) arrêtent périodiquement l'alimentation électrique des éléments comparateurs (Q10, Q11, Q13, Q14) de même que le courant de charge pour le condensateur (C1).

4. Circuit de suppression de ligne selon la revendication 2 ou 3, caractérisé en ce que le condensateur (C1) est essentiellement chargé pendant le parcours aller des lignes.

5. Circuit de suppression de ligne selon une ou plusieurs des revendications 1 à 4, caractérisé en ce que le deuxième signal de couplage (Phi2) est obtenu à l'aide d'un comparateur (Q21, Q23) à partir des impulsions de retour de ligne au niveau de la première entrée (21), une sortie du comparateur (Q21, Q23) étant reliée aux éléments de blocage (Q12, R6).

6. Circuit de suppression de ligne selon la revendication 5, caractérisé en ce qu'une autre entrée du comparateur (Q21, Q23) est reliée aux éléments transmetteurs (R10, R9).
